# EUROPÄISCHE PATENTSCHRIFT

(11) **EP 4 008 899 B1**
(45) Veröffentlichungstag und Bekanntmachung des Hinweises auf die Patenterteilung: **06.09.2023**
(21) Anmeldenummer: 21212154.5
(22) Anmeldetag: 03.12.2021
(51) Int. Cl.: F03D 13/10, B66C 23/18, B66C 15/04

(54) **VERFAHREN ZUM OPTIMIEREN EINES MONTIERENS EINES ZU INSTALLIERENDEN BAUTEILS AN EINER WINDENERGIEANLAGE SOWIE SYSTEM**
METHOD FOR OPTIMIZING THE MOUNTING OF A COMPONENT TO BE INSTALLED ON A WIND TURBINE AND SYSTEM
PROCÉDÉ D'OPTIMISATION D'UN MONTAGE D'UN COMPOSANT À INSTALLER SUR UNE ÉOLIENNE, AINSI QUE SYSTÈME

(30) Priorität: 04.12.2020 DE 102020132274
(43) Veröffentlichungstag der Anmeldung: 08.06.2022
(73) Patentinhaber: Universität Bremen, 28359 Bremen (DE); BIBA Bremer Institut für Produktion und Logistik GmbH, 28359 Bremen (DE)
(72) Erfinder: Haselsteiner, Andreas, 28209 Bremen (DE); Sander, Aljoscha, 28209 Bremen (DE)
(74) Vertreter: Weidner Stern Jeschke

(56) Entgegenhaltungen:
- WO-A1-2018/228810
- US-A1- 2017 050 824
- JIANG ZHIYU ET AL: "A parametric study on the final blade installation process for monopile wind turbines under rough environmental conditions", ENGINEERING STRUCTURES, ELSEVIER, AMSTERDAM, NL, Bd. 172, 29. Juni 2018 (2018-06-29), Seiten 1042-1056, XP085427441, ISSN: 0141-0296, DOI: 10.1016/J.ENGSTRUCT.2018.04.078

## Beschreibung

Die Erfindung betrifft ein Verfahren zum Optimieren eines Montierens eines zu installierenden Bauteils an einer Windenergieanlage, wobei ein installiertes Bauteil einen ersten Beschleunigungssensor zum Aufnehmen einer Beschleunigung aufweist. Weiterhin betrifft die Erfindung ein System zum Optimieren der Montage eines zu installierenden Bauteils einer Windenergieanlage. Zudem betrifft die Erfindung ein Verfahren zum Steuern einer Montagevorrichtung, insbesondere eines Krans, sowie eine Steuerung zum aktiven Beeinflussen einer Montagevorrichtung für eine Windenergieanlage.

Bei bekannten Verfahren zum Montieren einer Windenergieanlage oder zum Montieren von Bauteilen einer Windenergieanlage werden teilweise Sensordaten erfasst. Diese Sensordaten, wie beispielsweise Bewegungsdaten von Bauteilen, werden lokal auf Messeinheiten gespeichert, sodass die Daten nachträglich ausgewertet werden können.

Bei den bekannten Montageprozessen von Großkomponenten an Windenergieanlagen wird dabei eine Entscheidung über die Fortführung oder den Abbruch der Montage häufig so gefällt, dass Daten aus Wellenbewegung, Winddaten und auch zu einem Großteil die Erfahrung von Bauleitern genutzt werden, um eine solche Entscheidung zu treffen.

Die WO 2018/228810 A1 offenbart ein Verfahren zum Montieren eines zu installierenden Bauteils an einer Windenergieanlage, bei dem Bewegungen von Bauteilen mittels Sensoren aufgenommen werden und dann ein Hebewerkzeug wie beispielsweise ein Kran bezüglich der Bewegungen der Bauteile anhand der Sensorsignale synchronisiert wird.

Die US 2017/00508224 A1 betrifft ein Verfahren sowie eine Vorrichtung zum automatischen Aussteuern einer Position einer Last an einem Kran. Hierbei wird, beispielsweise mittels Winkelsensoren an einem gehobenen Gegenstand, eine Position aufgenommen und mit Windenseilen des Krans nachgesteuert. Damit kann die Position der Last gehalten werden.

Zhiyu Jiang et.al.: "A parametric study on the final blade installation process for monopile wind turbines under rough environmental conditions" beschreibt auftretende Phänomene bei der Installation von Windenergieanlagen sowie deren Modellierung.

Aufgabe der Erfindung ist es, den Stand der Technik zu verbessern.

Gelöst wird die Aufgabe durch ein Verfahren zum Optimieren eines Montierens eines zu installierenden Bauteils an einer Windenergieanlage, wobei ein installiertes Bauteil einen ersten Beschleunigungssensor zum Aufnehmen einer Beschleunigung aufweist, umfassend folgende Schritte:
- Ermitteln einer Störbeschleunigung und/oder einer, beispielsweise aus der Störbeschleunigung abgeleiteten, Größe, wie insbesondere einer Störgeschwindigkeit oder einer Störposition, des installierten Bauteiles in einer Störachse oder mehreren Störachsen mittels dem ersten Beschleunigungssensor,
- Prognostizieren eines zukünftigen Störbeschleunigungswertes oder einer daraus abgeleiteten Größe entlang der Störachse oder mehrerer Störachsen mittels einer mathematischen Methode, sodass ein erster Prognosewert für die zukünftige Störbeschleunigung und/oder eine daraus abgeleitete Größe des installierten Bauteils vorliegt,
- Vergleichen des ersten Prognosewertes mit einem ersten Schwellwert für eine zulässige Störbeschleunigung oder eine daraus abgeleitete Größe entlang der Störachse oder der Störachsen,
- Montieren des zu installierenden Bauteils, für den Fall, dass der Prognosewert unterhalb des Schwellwertes liegt,
sodass das Montieren optimiert durchgeführt wird.

Dadurch, dass aus der ermittelten Störbeschleunigung oder einer aus der Störbeschleunigung abgeleiteten Größe des installierten Bauteils in einer Störachse oder mehreren Störachsen eine Prognose über einen zukünftigen Störbeschleunigungswert oder eine daraus abgeleitete Größe getroffen wird, kann ein Vergleich des ersten Prognosewertes mit einem ersten Schwellwert für eine zulässige Störbeschleunigung erfolgen. Alternativ kann auch ein Vergleich des ersten Prognosewertes mit einer aus der zulässigen Störbeschleunigung abgeleiteten Größe entlang der Störachse getroffen werden. In einer weiteren Alternativen kann auch der Prognosewert direkt aus dem aktuellen Wert der Störbeschleunigung oder einer daraus abgeleiteten Größe wie einer Störgeschwindigkeit oder eines Störortes gebildet sein, so dass der Prognosewert identisch zu einem aktuellen Wert oder einem aktuellen Mittelwert aus einem vergangenen Betrachtungszeitraum ist. Somit kann das Bauteil dann montiert werden, wenn aus der Prognose oder dem aktuellen Wert ersichtlich ist, dass ein gefahrloses Montieren durchführbar ist. Ein solches gefahrloses Montieren ist insbesondere dann durchführbar, wenn die aktuelle oder zukünftige Störbeschleunigung oder eine aus der aktuellen oder zukünftigen Störbeschleunigung abgeleitete Größe klein genug ist, um schädlich große zukünftige Bewegungen des installierten Bauteils auszuschließen. Im Gegensatz zum Stand der Technik wird damit eine Prognose genutzt, um beispielsweise ein aktives Nachführen eines Krans zu umgehen und damit das Installieren deutlich zu vereinfachen.

Folgende Begriffe seien an dieser Stelle erläutert:
Ein "Optimieren eines Montierens" kann jede Verbesserung eines Montageprozesses oder der Sicherheit eines Montageprozesses an einer Windenergieanlage sein. Insbesondere besteht ein solches Optimieren aus der Erhöhung der Sicherheit, der Erhöhung einer Zuverlässigkeit oder der Vermeidung von Schäden oder Ungenauigkeiten während des Montierens.

Ein "zu installierendes Bauteil" kann jede noch nicht mit bereits installierten Bauteilen oder bereits installierten Elementen der Windenergieanlage verbundene Baugruppe sein. Insbesondere kann dies ein noch zu installierendes Großbauteil an bereits installierte oder aufgestellte Baugruppen oder Bauteile der Windenergieanlage sein. Beispielsweise ist ein solches zu installierendes Bauteil ein Rotorblatt einer Windenergieanlage.

Ein "installiertes Bauteil" kann jedes bereits am Aufstellort der Windenergieanlage befindliches und fest montiertes Bauteil sein, an welches dann weitere, nämlich zu installierende, Bauteile installiert werden können. Beispielsweise ist ein installiertes Bauteil ein Fundament, auf welches dann als zu installierendes Bauteil ein Mast oder Turm einer Windenergieanlage montiert werden soll. Dieser Turm oder Mast oder ein Teil davon ist dann im Folgenden, nämlich nach dessen Montage das wiederum installierte Bauteil für ein zu installierendes Bauteil, wie ein Maschinenhaus, im Weiteren ist dann das fest montierte Maschinenhaus das installierte Bauteil für ein zu installierendes Rotorblatt.

Ein "Beschleunigungssensor" kann jeder Sensor oder Messwertgeber sein, welcher geeignet ist, eine Beschleunigung aufzunehmen, zu verarbeiten, in ein Datensignal umzuwandeln und entsprechend bereitzustellen. Beispielsweise ist ein solcher Beschleunigungssensor ein Piezoelement, ein resistiver Messwertgeber, ein magnetisch messender Beschleunigungsgeber oder ein auf andere Weise messender Sensor. Weiterhin kann auch ein ortsauflösender Sensor, wie beispielsweise ein GPS-Modul, ein Laser-Entfernungsmesser, ein LIDAR (light detection and ranging)-System oder ein anderes System, für die Bestimmung, Berechnung und/oder Ausgabe eines Beschleunigungswertes und/oder einer Geschwindigkeits- oder Ortsinformation genutzt werden.

Eine "Störbeschleunigung" kann jede Beschleunigung sein, welche dazu geeignet ist, den Vorgang eines Montierens eines zu installierenden Bauteils an einer Windenergieanlage zu stören oder anderweitig negativ zu beeinflussen. Eine solche Störbeschleunigung kann dabei beispielsweise in einer Achsrichtung parallel zu einer Fügerichtung ausgerichtet sein, da eine solche Beschleunigung ein unkontrolliertes Aneinanderschlagen von Bauteilen bewirken kann. Weiterhin kann eine solche Störbeschleunigung aber auch in einer anderen Achse gegenüber einer Montagerichtung liegen, sodass beispielsweise eine Querschwingung des Turmes einer Windenergieanlage einen vorhersagbaren, negativen Einfluss auf das Montageergebnis hat. Es sei an dieser Stelle darauf hingewiesen, dass das jeweilige Bezugssystem und/oder das jeweilige Koordinatensystem für die Störbeschleunigung nicht deckungsgleich zu einem Montage- oder Bewegungskoordinatensystem des installierten Bauteils oder eines anderen Bauteils sein muss, sondern abhängig von den ermittelten Störeinflüssen auf das Montieren wählbar ist.

Eine "abgeleitete Größe" dieser Störbeschleunigung kann jede durch mathematische Operation ermittelte Größe auf Grundlage der Störbeschleunigung sein. Beispielsweise ist dies eine Bewegung oder Geschwindigkeit, welche durch ein Integrieren des Beschleunigungswertes ermittelt ist. Aus einer solchen Bewegung oder Geschwindigkeit kann dann auch durch nochmaliges Integrieren eine Position oder beispielsweise ein Ort des installierten Bauteiles abgeleitet sein. Auch die Änderung der Beschleunigung, die Schwingungsamplitude oder die Schwingungsrichtung kann eine abgeleitete Größe sein. Alternativ kann eine solche Größe auch direkt, also mittels eines für die Geschwindigkeits- oder Ortsbestimmung geeigneten Sensors aufgenommen werden.

Eine "Störachse" ist insbesondere die Raumachse, in welcher die Störbeschleunigung auftritt. Eine solche Störachse kann auch in unterschiedlichen Raumrichtungen in Form von mehreren Störachsen vorliegen, sofern Störbeschleunigungen in diesen Raumrichtungen relevant für die Beurteilung einer Störung des Montageprozesses sind.

Ein "zukünftiger Störbeschleunigungswert" kann jeder, beispielsweise aus dem Prognostizieren hergeleitete, Beschleunigungswert sein, welcher zukünftig, also zu einem Zeitpunkt nach dem Ermitteln der jeweiligen Störbeschleunigung, vorliegen wird oder mit einer gewissen Wahrscheinlichkeit vorliegen wird. Analog zu den Ausführungen zur Störbeschleunigung ist "eine daraus abgeleitete Größe" ein aus dem Prognostizieren hergeleiteter Geschwindigkeits- oder Ortswert oder auch eine andere, durch mathematische Operation abgeleitete Größe.

Eine "mathematische Methode" für ein solches Prognostizieren ist beispielsweise eine Berechnungsmethode, welche eine Extrapolation vorliegender Daten, eine gewichtete Extrapolation mittels zusätzlicher Einflussfaktoren oder auch eine andere aus der Statistik und/oder Wahrscheinlichkeitsrechnung bekannte mathematische Methode. Mittels einer solchen mathematischen Methode kann dann ein Erwartungswert für zukünftige Beschleunigungswerte errechnet werden.

Ein "Prognosewert" ist die zahlenmäßige Ausdrucksweise für einen zukünftigen Wert, insbesondere einen zukünftigen Störbeschleunigungswert oder eine daraus abgeleitete Größe für die Zukunft. Beispielsweise wird ein solcher erster Prognosewert in Form einer Ortskoordinate, einer Bewegungskoordinate oder auch einer Beschleunigungskoordinate und/oder beispielsweise eines entsprechenden Vektors angegeben. Im einfachsten Fall ist der Prognosewert ein aktueller Wert, wenn erwartet wird, dass keine Veränderung eintritt oder der aktuelle Wert eine sichere Aussage ermöglicht. Zudem kann ein solcher zu Grunde liegender aktueller Wert auch ein Mittelwert aus vorherigen Messwerten sein.

Insbesondere hat sich überraschend gezeigt, dass, obwohl das Schwingen von Bauteilen oder der Windenergieanlage chaotisch ist, kurzfristig Vorhersagen und somit Prognosen von Beschleunigungswerten sowie auch aktuelle Beschleunigungs- oder Schwingungswerte valide sind, sodass eine Entscheidung in Bezug auf Montieren oder nicht montieren möglich ist.

Ein "Schwellwert" ist beispielsweise ein Wert, Zahlenwert oder aus einem Datensatzäquivalent abgeleiteter Wert, welcher als Grenze für die Verarbeitung und/oder Einschätzung eines Signales verwendet wird. Ein solcher Schwellwert kann beispielsweise eine maximal zulässige Schwingungsamplitude, und/oder eine maximal zulässige Geschwindigkeit und/oder eine maximal zulässige Beschleunigung des installierten Bauteils abbilden. Anhand dieses Schwellwertes kann dann entschieden werden, ob der aktuelle Wert für die Störbeschleunigung, Störgeschwindigkeit oder den Störort oder der Prognosewert kritisch für die Montage des zu installierenden Bauteils ist oder nicht. Der Schwellwert kann dabei in Bezug zu einer Montageachse oder auch in Bezug zu einer von der Montageachse abweichenden Ausrichtung definiert sein.

Es hat sich überraschend gezeigt, dass insbesondere ein Schwellwert für eine Beschleunigung quer zur Montageachse eine Voraussage über die Möglichkeit eines Montierens eines Bauteils entlang der Montageachse ermöglicht, da hier Koppeleffekte auftreten. Dies gilt ebenso für andere Bezugsachsen und ist abhängig von der genauen Ausgestaltung der jeweiligen Windenergieanlage und kann durch entsprechende Messreihen ermittelt werden.

Um für das Optimieren der Montage auch Bewegungen des zu installierenden Bauteils in die Entscheidung mit einbinden zu können, ist am zu installierenden Bauteil ein zweiter Beschleunigungssensor zum Aufnehmen einer Beschleunigung angeordnet und das Verfahren umfasst folgende, zusätzliche Schritte:
- Ermitteln einer Montagebeschleunigung oder einer, insbesondere daraus abgeleiteten, Größe des zu installierenden Bauteils in einer Montageachse oder mehrerer Montageachsen mit dem zweiten Beschleunigungssensor,
- Prognostizieren eines zukünftigen Montagebeschleunigungswertes des zu installierenden Bauteils entlang der Montageachse oder mehrerer Montageachsen mittels einer mathematischen Methode, sodass ein zweiter Prognosewert für die zukünftige Montagebeschleunigung oder eine daraus angeleitete Größe des zu installierenden Bauteils vorliegt,
- Vergleichen des zweiten Prognosewertes mit einem zweiten Schwellwert für eine zulässige Montagebeschleunigung oder eine daraus abgeleitete Größe des zu installierenden Bauteils entlang der Montageachse oder der Montageachsen,
- Montieren des zu installierenden Bauteils für den Fall, dass der zweite Prognosewert unterhalb des zweiten Schwellwertes liegt.

Eine "Montagebeschleunigung" ist analog zur oben beschriebene Störbeschleunigung beispielsweise eine am zu installierenden Bauteil gemessene Beschleunigung, welche für den Montageprozess eine relevante Beschleunigungsgröße oder Störgröße darstellt.

Eine "daraus abgeleitete Größe" ist beispielsweise eine durch mathematische Integration hergeleitete Geschwindigkeits- oder Ortsgröße des zu installierenden Bauteils. Im Übrigen sei auf die Ausführungen oben verwiesen, da auch die hier genannte abgeleitete Größe direkt, also als Geschwindigkeits- oder Ortsgröße gemessen sein kann.

Eine "Montageachse" ist eine solche Raumachse, welche für den Montageprozess relevant ist. Beispielsweise ist eine solche Montageachse die Achse, entlang derer eine Montage des zu installierenden Bauteils an das bereits installierte Bauteil erfolgt. Einer solche Montageachse kann allerdings auch eine weitere Montageachsen zugeordnet sein, sodass mehrere relevante Montageachsen vorliegen können.

In einer Ausführungsform werden folgende, zusätzliche Schritt durchgeführt:
- Fusionieren des ersten Prognosewertes und des zweiten Prognosewertes derart, dass ein fusionierter Prognosewert für eine Relativbeschleunigung oder eine daraus abgeleitete Größe zwischen installiertem Bauteil und zu installierendem Bauteil vorliegt,
- Vergleichen des fusionierten Prognosewertes mit einem dritten Schwellwert für eine zulässige Relativbeschleunigung oder zulässige daraus abgeleitete Größe des zu installierenden Bauteils und des installierten Bauteils,
- Montieren des zu installierenden Bauteils, für den Fall, dass der überlagerte Prognosewert unterhalb des dritten Schwellwertes liegt.

Durch das Fusionieren des ersten Prognosewertes und des zweiten Prognosewertes kann ein direkter Vergleich dieser Werte miteinander sowie eine Aussage über eine Relativbeschleunigung zweier zueinander in Abhängigkeit stehender Bauteile getroffen werden. Das Vergleichen des fusionierten Prognosewertes mit einem dritten Schwellwert liefert dann eine zuverlässige Information darüber, ob auch die Relativbewegung des installierten Bauteils in Relation zu dem zu installierenden Bauteil für die zukünftige Montage ein Problem darstellen wird. Sofern auch dieser fusionierte Prognosewert unterhalb eines dritten Schwellwertes liegt, kann eine Montage zuverlässig und optimiert durchgeführt werden. Ein Fusionieren kann dabei beispielsweise mittels einer Addition oder Subtraktion oder einer gewichteten Addition oder Subtraktion oder einer anderen mathematischen Handlung erfolgen, welche eine Aussage über die zukünftige Relativbeschleunigung des zu installierenden Bauteils und des installierten Bauteils oder einer daraus abgeleiteten Größe ermöglicht. Beispielsweise wird der erste Prognosewert vom zweiten Prognosewert subtrahiert, so dass aus dem derart fusionierten Prognosewert eine Aussage über die zukünftige Relativbeschleunigung getroffen werden kann.

In einer alternativen Ausführung kann der Vergleich des Prognosewertes für eine Relativbeschleunigung und/oder einer daraus abgeleiteten Größe auch ohne die vorig genannten Schritte durchgeführt werden, also ohne vorher einen Vergleich der Störbeschleunigung mit dem ersten Schwellwert und/oder der Montagebeschleunigung mit dem zweiten Schwellwert durchzuführen.

Um ein axiales Zusammenführen von zu installierendem Bauteil und installiertem Bauteil bestmöglich zu ermöglichen, erfolgt das Ermitteln der Störbeschleunigung und/oder der Montagebeschleunigung in einer Bewegungsachse entlang oder im Wesentlichen entlang einer Fügeachse des installierten Bauteils und/oder des zu installierenden Bauteils.

"Entlang oder im Wesentlichen entlang" eine Fügeachse beschreibt hierbei eine Richtung und/oder Achsausrichtung bezüglich einer Fügeachse, welche beispielsweise +15° bis - 15° von dieser Fügeachse abweicht. "Entlang" ist hierbei eine Angabe, welche übliche Abweichungen im Rahmen von Toleranzen oder technischer Übung in Relation zur Größe der behandelten Bauteile zulässt.

Eine "Fügeachse" ist jene Achse, entlang welcher ein zu installierendes Bauteil in Richtung des installierten Bauteils bewegt wird. Beispielsweise ist dies eine Achse, in welcher ein Bolzen in eine entsprechend zum Bolzen korrespondierende Bohrung eingeführt wird. Die Fügeachse ist hierbei auch mit den üblichen und technisch bedingten Abweichungen von beispielsweise +10° bis -10° von einer mathematisch exakten Achse definiert. Winkelangaben beziehen sich dabei jeweils auf einen Vollwinkel von 360°.

In einer Ausführungsform erfolgt das Ermitteln der Störbeschleunigung und/oder der Montagebeschleunigung in einer Bewegungsachse quer oder im Wesentlichen quer zu einer Fügeachse des installierten Bauteils und/oder des zu installierenden Bauteils.

"Quer oder im Wesentlichen quer" beschreibt hierbei eine im Bereich einer Orthogonalen zu einer Fügeachse liegenden Achse. Diese Bewegungssachse kann dabei bis zu beispielsweise +15° bis -15° von einer exakten Orthogonalen abweichen, also im Bereich von technisch üblichen Abweichungen im Bezug zur Größenordnung der Bauteile liegen.

Um Beschleunigungssignale, beispielsweise eine Störbeschleunigung oder eine Montagebeschleunigung möglichst exakt und im Bereich der eigentlichen Montage- oder Fügeaufgabe exakt ermitteln zu können, ist der erste Beschleunigungssensor an einem Fügebereich des installierten Bauteils und/oder der zweite Beschleunigungssensor an einem Fügebereich des zu installierenden Bauteils angeordnet.

In einer weiteren Ausführungsform wird der zukünftige Störbeschleunigungswert und/oder Montagebeschleunigungswert und/oder die aus dem Störbeschleunigungswert und/oder dem Montagebeschleunigungswert abgeleitete Größe und/oder der zukünftige Relativbeschleunigungswert oder die aus dem zukünftigen Relativbeschleunigungswert abgeleitete Größe durch Bestimmen einer Steigung eines Amplitudenverlaufs und/oder durch Bestimmen einer Steigung einer Hüllkurve eines Amplitudenverlaufs prognostiziert.

Das Bestimmen einer Steigung eines Amplitudenverlaufs und/oder das Bestimmen einer Steigung einer Hüllkurve eines Amplitudenverlaufs kann hierbei sowohl am eigentlichen Beschleunigungswert aber auch an davon abgeleiteten Größen, wie einer Geschwindigkeit oder einem Ort, erfolgen. Insbesondere mittels des Bestimmens einer Steigung einer Hüllkurve kann eine Glättung des jeweiligen Wertes erfolgen. Damit kann dann eine zuverlässige Aussage über die Tendenz des zukünftigen Störbeschleunigungswertes und/oder der zukünftigen Montagebeschleunigungswertes und/oder den entsprechend abgeleiteten zukünftigen Beschleunigungswerten getroffen werden.

Um das Optimieren der Montage besonders komfortabel und/oder auch in Echtzeit zu ermöglichen, werden der Störbeschleunigungswert und/oder der Montagebeschleunigungswert mittels eines Funksignals und/oder mittels eines optischen Signals, insbesondere an eine Auswerteeinheit zum Prognostizieren der zukünftigen Störbeschleunigung und/oder zukünftigen Montagebeschleunigung oder der aus der zukünftigen Störbeschleunigung und/oder zukünftigen Montagebeschleunigung abgeleiteten Größe und/oder der zukünftigen Relativbeschleunigung oder der aus der zukünftigen Relativbeschleunigung abgeleiteten Größe übertragen.

Der Begriff "Echtzeit" beschreibt dabei den Betrieb eines technischen, insbesondere informationstechnischen Systems, welches bestimmte Ereignisse und/oder Handlungen zuverlässig innerhalb einer vorbestimmten Zeitspanne, beispielsweise eines festen Zeitrasters, liefern kann. Im engeren Sinne kann der Begriff "Echtzeit" auch derart verstanden werden, dass die Informationen ohne merkbare Verzögerung und/oder ohne Verzögerung gegenüber der mit den Daten zu steuernden Reaktion eines technischen Systems verarbeitet und/oder übermittelt wird.

Ein "Funksignal" kann jede mittels elektromagnetischer Wellen übermittelte Dateninformation sein. Insbesondere wird ein solches Funksignal unabhängig von zwischen einem Sender und Empfänger liegenden Bauteilen oder Baugruppen übermittelt, sofern diese elektromagnetische Felder nicht vollständig abschirmen.

Ein "optisches Signal" kann jede Information sein, welche mit optischen Mitteln, also mittels Lichts, InfrarotLicht, Laserlicht, Lichtschranken oder anderen vergleichbaren Mitteln übertragen wird. Insbesondere ist eine solches optisches Signal zeitlich und/oder farblich aufgelöst, so dass eine Mehrzahl von Informationen je Zeiteinheit übertragen werden kann.

Eine "Auswerteeinheit" kann jede technische oder technisch unterstützte Einrichtung sein, welche dazu eingerichtet ist, die Entscheidung über eine Fortführung oder einen Abbruch des Montierens zu unterstützen oder ganz oder teilweise zu treffen. Beispielsweise ist eine einfache "Auswerteeinheit" ein Bildschirm mit einer Anzeigemöglichkeit für unterschiedliche ermittelte Beschleunigungswerte, welche dann von einem Bediener eingeschätzt und bewertet werden. Eine aufwendigere Form einer solchen Auswerteeinheit kann ein Computer sein, welcher den Störbeschleunigungswert und/oder den Montagebeschleunigungswert aufnimmt, verarbeitet und einen Vergleich mit den entsprechenden Schwellwerten vornimmt, so dass eine Anzeige eines "go" oder "no-go" für das Montieren des zu installierenden Bauteils auf dieser Grundlage erfolgt.

Insbesondere ist eine solche Auswerteeinheit als zentrale Einheit mit einem Funkempfänger im Bereich des Montageplatzes der Windenergieanlage angeordnet und kann damit zentral und unabhängig von den Bauteilen der Windenergieanlage alle Signale von Beschleunigungssensoren und weiteren Sensoren zusammenführen und eine Echtzeit-Entscheidung bezüglich des sicheren oder unsicheren Montierens ermöglichen.

In einer weiteren Ausführungsform wird das Prognostizieren mittels eines weiteren Vergleichs oder weiterer Vergleiche mit einem weiteren Schwellwert oder weiteren Schwellwerten insbesondere mit einem oder mehrerer Schwellwerte, welcher eine Funktion aus einer Wellenhöhe, einer Wellenrichtung, einer Windgeschwindigkeit und/oder einer Windrichtung ist, unterstützt, sodass mittels dieses weiteren Vergleichs oder dieser weiteren Vergleiche die Entscheidung über ein Durchführen des Montierens unterstützt wird.

Somit können weitere, relevante Schwellwerte mit in die Entscheidung über ein Durchführen des Montierens einbezogen werden. Beispielsweise kann bei einer bestimmten Wellenhöhe und/oder einer bestimmten durchschnittlichen Wellenhöhe in einem Betrachtungszeitfenster das Montieren unterbrochen werden. Beispielsweise kann zudem ein Erreichen einer kritischen Windrichtung und/oder einer kritischen Windgeschwindigkeit mittels des Vergleichs mit einem entsprechenden Schwellwert zur Windrichtung und/oder Windgeschwindigkeit dazu genutzt werden, ein Durchführen des Montierens zu unterbrechen, wenn beispielsweise die Windgeschwindigkeit aus einer bestimmten Richtung in Relation zur Windenergieanlage zu hoch für eine sichere Montage ist.

Ein Bestimmen der Wellenhöhe kann dabei beispielsweise mittels einer mit einem entsprechenden Beschleunigungssensor und beispielsweise einer dazu zugeordneten Funkeinheit bestückten Boje durchgeführt werden. Die Boje kann dann in ihrer Funktion als auf einer Wasseroberfläche schwimmendes Objekt als Referenz für die Wellenbewegung genutzt werden. Entsprechende Beschleunigungssignale des Beschleunigungssensors werden umgewandelt und mittels der Funkeinheit an beispielsweise eine zentrale Auswerteeinheit übertragen.

Ein Bestimmen der Windrichtung und/oder der Windgeschwindigkeit kann dabei mittels eines Wind-Anemometers, einer Windfahne oder einem anderen geeigneten Messgerät erfolgen. Die Übertragung der entsprechenden Messwerte kann dann ebenfalls per Funk, beispielsweise an eine zentrale Auswerteeinheit, erfolgen.

In einem weiteren Aspekt wird die Aufgabe gelöst durch ein System zum Optimieren der Montage eines zu installierenden Bauteils einer Windenergieanlage, welches eingerichtet ist zum Durchführen eines Verfahrens gemäß der oben beschriebenen Ausführungsformen.

Ein solches System weist beispielsweise mehrere Beschleunigungssensoren, insbesondere ergänzt um einen Wind- und einen Wellensensor, auf. Weiterhin kann ein solches System zusätzliche Sensorik, wie beispielsweise Kameras und/oder Schallaufnehmer wie beispielsweise Mikrofone zum Erfassen von Bildern und/oder Tönen am Ort des Montierens umfassen.

Mittels eines solchen Systems kann dann, insbesondere direkt während der Montage und beispielsweise auch in Echtzeit die Montage einer Windenergieanlage überwacht und begleitet werden. Das System liefert dann mittels der Ausgabe der entsprechenden Signale aus dem erfindungsgemäßen Verfahren eine klare und deutlich ablesbare Entscheidungsgrundlage für ein Fortführen oder Abbrechen eines Montierens.

In einem weiteren Aspekt wird die Aufgabe gelöst durch ein Verfahren zum Steuern einer Montagevorrichtung, insbesondere eines Krans, mit einer auf die Montagevorrichtung einwirkenden Steuerungseinheit, für eine Windenergieanlage, wobei ein Optimieren eines Montierens eines zu installierenden Bauteils mit einem Verfahren gemäß der oben beschriebenen Ausführungsformen durchgeführt wird, wobei die Steuerungseinheit derart eingerichtet ist, dass eine Relativbewegung zwischen dem installierten Bauteil und dem zu installierenden Bauteil auf Grundlage der ermittelten oder zukünftigen Störbeschleunigung und/oder Montagebeschleunigung und/oder Relativbeschleunigung und/oder einer abgeleiteten Größe der Störbeschleunigung und/oder Montagebeschleunigung und/oder Relativbeschleunigung mittels einer Steuerung oder Regelung der Montagevorrichtung reduziert oder vermieden wird.

Eine solche Steuerung oder Regelung kann beispielsweise derart erfolgen, dass ein Kran mit gezielten Gegenbewegungen zu bereits gemessenen oder ermittelten oder prognostizierten zukünftigen Störbeschleunigungen und/oder zukünftigen Montagebeschleunigungen oder zukünftigen Relativbeschleunigungen diesen jeweils oder kombiniert miteinander entgegengewirkt. Hierzu können klassische Steuerungs- oder Regelungsalgorithmen genutzt werden.

In einem weiteren Aspekt wird die Aufgabe gelöst durch eine Steuerung zum aktiven Beeinflussen einer Montagevorrichtung für eine Windenergieanlage, welche eingerichtet ist zum Durchführen eines Verfahrens der oben beschriebenen Ausführungsformen.

Eine solche Steuerung umfasst beispielsweise Mittel zur Ansteuerung und/oder Überlagerung der Ansteuerung eines Antriebsmotors für eine oder mehrere Achsen einer Kransteuerung, sodass die durch die Steuerung ermittelten notwendigen Gegenmaßnahmen gegen beispielsweise ein Aufschwingen von Bauteilen direkt in die Steuerung des Krans und damit in das entsprechende mechanische System eingekoppelt werden.

Im Weiteren wird die Erfindung anhand von Ausführungsbeispielen näher erläutert. Es zeigen
- Figur 1: eine schematische Darstellung einer Montage eines Rotorblattes an die Nabe einer im Bau befindlichen Offshore-Windkraftanlage,
- Figur 2: eine vergrößerte schematische Darstellung eines Fügebereiches der im Bau befindlichen Offshore-Windraftanlage,
- Figur 3: eine schematische Darstellung eines rechnergestützten Montage-Unterstützungs-Systems für die Montage einer Windkraftanlage,
- Figur 4: eine schematische Darstellung eines Auswertebildschirms des Montage-Unterstützungs-Systems der Figur 3, sowie
- Figur 5: ein schematisches Ablaufdiagramm eines Verfahrens zum Optimieren eines Montierens eines zu installierenden Bauteils an einer Windenergieanlage.

Eine Windkraft-Baustelle 101 umfasst die Aufgabe, Großkomponenten miteinander zu verbinden. Es soll eine Windkraftanlage 102 aufgebaut werden. Die gezeigte Windkraft-Baustelle 101 ist dabei die Baustelle einer Offshore-Windkraftanlage und befindet sich im Bereich einer Wasseroberfläche 100.

Auf einem Fundament 103, welches fest im Meeresboden verankert ist, ist ein Übergangsstück 105 aufgebracht. Das Übergangsstück105 entspricht dem Teil der späteren Offshore-Windkraftanlage, welcher im Bereich eines Tidenhubs der Wasseroberfläche 100 angeordnet ist. Das Übergangsstück 105 ist daher besonders korrosionsgeschützt und bietet mechanische Anschlussmöglichkeiten für eine Offshore-Windkraftanlage.

Auf das Übergangsstück 105 ist ein Turm 107 mit einem darauf angeordneten Maschinenhaus 109 drehbar montiert. Mittels des drehbaren Maschinenhauses kann die spätere Offshore-Windenergieanlage nach deren Aufbau und Montage in eine Windrichtung gedreht werden. Das Maschinenhaus 109 weist an einer Stirnseite 110 eine Nabe 111 für den Anschluss von drei Rotorblättern auf. An der Nabe 111 sind deswegen insgesamt drei Blattanschlüsse 113 gleichmäßig verteilt um deren Umfang angeordnet.

Ein Rotorblatt 121 wird aktuell an einem der Blattanschlüsse 113 montiert. Das Rotorblatt 121 weist eine Dichtung 123 mit einem Flansch 125 auf. Der Flansch 125 gleitet im montierten Zustand dabei vollständig in einen Blattanschluss 113, bis die Dichtung 123 flächig an der Nabe 111 anliegt.

Das Rotorblatt 121 weist am Flansch 125 weiterhin Stehbolzen 127 auf, welche der späteren Verschraubung des Rotorblatts 121 in der Nabe 111 dienen.

Neben den Bauteilen für die spätere Offshore-Windenergieanlage ist für die Montage ein Errichterschiff 141 auf Pfählen 143 temporär auf dem Meeresboden verankert (Meeresboden nicht dargestellt). Auf dem Errichterschiff 141 ist ein Kran 145 angeordnet. Der Kran 145 weist ein Maschinenhaus 147, einen Ausleger 149 sowie ein Kran-Seil 151 auf. Am Seil 151 ist mittels eines Hebemittels 153 das Rotorblatt 121 balanciert aufgehängt. Der Kran 145 ist so eingestellt, dass das Rotorblatt 121 auf Höhe der Nabe 111 angeordnet ist, die Nabe 111 ist in eine Position gedreht, sodass ein Blattanschluss 113 dem Rotorblatt 121 direkt gegenübersteht. Für die Montage muss nun das Rotorblatt 121 in den Blattanschluss 113 der Nabe 111 eingeführt werden.

Ein Computer 201 weist Knöpfe 202 sowie einen Bildschirm 221 auf. Die Knöpfe 202 können in einer Alternativen auch mittels eines Touch-Displays ersetzt sein. Der Computer 201 umfasst zudem ein Funk-Empfangsmodul und eine Auswerteeinheit (nicht dargestellt) und dient zusammen mit den im Folgenden beschriebenen Bestandteilen als computergestütztes System zum Unterstützen einer Montage für die Offshore-Windenergieanlage an der Windkraft-Baustelle 101.

Dem Computer 201 ist ein Beschleunigungsmodul 203, ein Beschleunigungsmodul 205, ein Kameramodul 207, ein Windmodul 209 sowie ein Bojenmodul 211 zugeordnet.

Das Beschleunigungsmodul 203 umfasst einen Beschleunigungssensor sowie eine Funkeinheit. Mittels der Funkeinheit kann ein vom Beschleunigungssensor ermitteltes Beschleunigungssignal an das Funk-Empfangsmodul des Computers 201 übertragen werden. Analog dazu weist das Beschleunigungsmodul 205 einen baugleichen Beschleunigungssensor sowie ein weiteres Funkmodul auf.

Das Beschleunigungsmodul 203 ist auf dem Maschinenhaus 109 angeordnet und dient zur Ermittlung von Störschwingungen des Maschinenhauses und/oder des Turms 107.

Das Beschleunigungsmodul 205 ist im Bereich des Anschlussflansches 123 am Rotorblatt 121 angebracht und ermittelt an dieser Stelle Montagebeschleunigungen des Rotorblatts 121.

Das Kameramodul 207 weist ebenfalls ein Funkmodul auf, mit welchem Bildsignale an den Computer 201 übertragen werden können. Das Windmodul 209 weist ein Anemometer sowie eine Einrichtung zum Bestimmen der Windrichtung auf. Dazu weist das Windmodul 209 ebenfalls ein Funkmodul auf, mittels dem die Informationen zu Windrichtung und Windstärke an den Computer 201 übertragen werden können.

Das Kameramodul 207 ist im Endbereich des Auslegers 149 des Krans 145 angeordnet und liefert ein Übersichtsbild über die Windkraft-Baustelle 101. In etwa an gleicher Stelle ist auch das Windmodul 209 angeordnet, um eine verlässliche Information über Windrichtung und -stärke auf der Windkraft-Baustelle 101 an den Computer 201 zu liefern.

Das Bojenmodul 211 an einer Boje 212 umfasst ebenfalls einen Beschleunigungssensor sowie ebenfalls ein Funkmodul. Die Boje 212 schwimmt auf der Wasseroberfläche 100 in der Nähe des Fundamentes 103, sodass mittels dem Bojenmodul 211 Informationen über Wellenbewegungen aufgenommen und an den Computer 201 übertragen werden können, indem die Bewegungen der Boje 212 aufgenommen und übertragen werden.

Insgesamt steht damit im Computer 201 eine Echtzeit-Lage bezüglich der Beschleunigungen des Maschinenhauses 109, der Beschleunigung des Rotorblattes 121, einer Bildinformation von der Windkraft-Baustelle 101, einer Information zu Windrichtung und -stärke sowie eine Information zur Wellenstärke an der Windkraft-Baustelle 101 zur Verfügung.

Im Folgenden sei der Bildschirm 221 des Computers 201 detaillierter beschrieben:

Auf dem Bildschirm 221 ist ein Koordinatensystem aus einer waagerechten Achse bezüglich der Zeit 231 sowie einer senkrechten Achse bezüglich des Ortes 233 dargestellt. Über den zeitlichen Verlauf entlang der Zeit 231 wird ein Beschleunigungssignal 242 in einem Signalverlauf 243 dargestellt. Das Beschleunigungssignal 242 entspricht dabei dem mittels Funks übertragenen Beschleunigungssignal des Beschleunigungsmoduls 203. Das Beschleunigungssignal 244, welches als Signalverlauf 245 auf dem Bildschirm 221 dargestellt wird, entspricht dem vom Beschleunigungsmodul 205 übermittelten Beschleunigungssignal zur Montagebeschleunigung des Rotorblattes 121. Die Darstellung auf dem Bildschirm 221 kann dabei sowohl entsprechend einer Raumachse (beispielhaft x- oder z-Achse) oder auch betragsmäßig bezüglich des jeweiligen Beschleunigungssignals dargestellt werden. Gezeigt ist eine Darstellung des vektoriellen Betrages 246 für das Beschleunigungssignal 242 sowie eines vektoriellen Betrages 248 für das Beschleunigungssignal 244.

Ein Schwellwert 251, welcher parallel zur Zeitachse 231 als maximal zulässiger Beschleunigungswert aufgetragen ist, definiert die maximal zulässige Beschleunigung für das Maschinenhaus 109 sowie das Rotorblatt 121. Hierbei ist im gezeigten Beispiel der Schwellwert 251 für das Maschinenhaus 109 und das Rotorblatt 121 gleich, kann jedoch je nach Bauteilgröße auch voneinander abweichen.

Innerhalb des Computers 201 erfolgt dazu eine Voraussage über die jeweilige zukünftige Beschleunigung mittels einer Extrapolation des jeweiligen Hüllwertes der jeweiligen Beschleunigungssignale 242 und 244 über einen bestimmten Messzeitraum, sodass eine Voraussage über die zu erwartenden Maxima getroffen wird. Der Messzeitraum ist von an den Knöpfen eingestellten Parametern zur jeweiligen zu errichtenden Offshore-Windkraftanlage abhängig. Einflussfaktoren hierfür sind unter anderem die Höhe des Turmes 107, die Art des Fundamentes 103 sowie die Größe der Offshore-Windkraftanlage. Ist auf Grund der Voraussage zu erwarten, dass das vorausgesagte Beschleunigungssignal 242 mit dem Signalverlauf 243 und/oder das Beschleunigungssignal 244 mit dem Signalverlauf 245 den Schwellwert 251 überschreiten wird, so wird die Montage nicht weitergeführt und die Aktivität auf der Windkraft-Baustelle 101 kurzfristig eingestellt.

In einer Alternativen kann auf dem Bildschirm 221 auch ein aus den jeweiligen Beschleunigungen abgeleitetes Signal, nämlich ein Ortssignal des Maschinenhauses 109 und/oder des Rotorblatts 121 angezeigt werden. Die Auswertung bezüglich des Vergleichs mit dem Schwellwert 251 erfolgt dann analog zum eben beschriebenen Ausführungsbeispiel.

In einer weiteren Alternativen kann anstatt der Extrapolation des jeweiligen montagerelevanten Wertes auch ein aktueller Wert zum Vergleich mit dem Schwellwert herangezogen werden.

Die mittels Funk übermittelten Signale des Kameramoduls 207, des Windmoduls 209 sowie des Bojenmoduls 211 werden innerhalb des Computers 201 als Datensatz vorgehalten. Dabei erfolgt bezüglich des Windmoduls 209 eine automatische Überwachung der Windstärke sowie der Windrichtung gegenüber eines im Computer 201 hinterlegten Schwellwertes. Weiterhin erfolgt ein Vergleich des Signals des Bojenmoduls 211 gegenüber einem im Computer 201 hinterlegten Schwellwert für die maximale Wellenhöhe und maximale Wiederholungsfrequenz der Wellen. Sofern eines dieser Signale den jeweils dazu hinterlegten Schwellwert überschreitet, wird im Bildschirm 221 des Computers 201 eine Warnung ausgegeben, sodass eine Echtzeit-Warnung ermöglicht ist. Diese Echtzeit-Warnung dient dazu, ein Montieren des Rotorblatts 121 an das Maschinenhaus 109 auch nur dann durchzuführen, wenn dies auf Grundlage der genannten zusätzlichen Mess-Informationen sicher erscheint. In einer Alternativen können die verschiedenen Messgrößen auch gemeinsam verarbeitet werden, sodass eine zusammenfassende Größe mit einem Schwellwert abgeglichen wird.

In einer weiteren Alternativen wird der Kran 145 mittels der aufgenommenen Signale aus dem Beschleunigungsmodul 203 und dem Beschleunigungsmodul 205 derart angesteuert, dass ein möglichst gleichmäßiges Schwingen des Rotorblattes 121 und der Motorgondel 109 erzielt wird. Dazu werden die Ausgaben des Computers 201 an eine Steuerung des Krans 145 rückgekoppelt und als Regelschleife mit den Kranantrieben betrieben (nicht dargestellt).

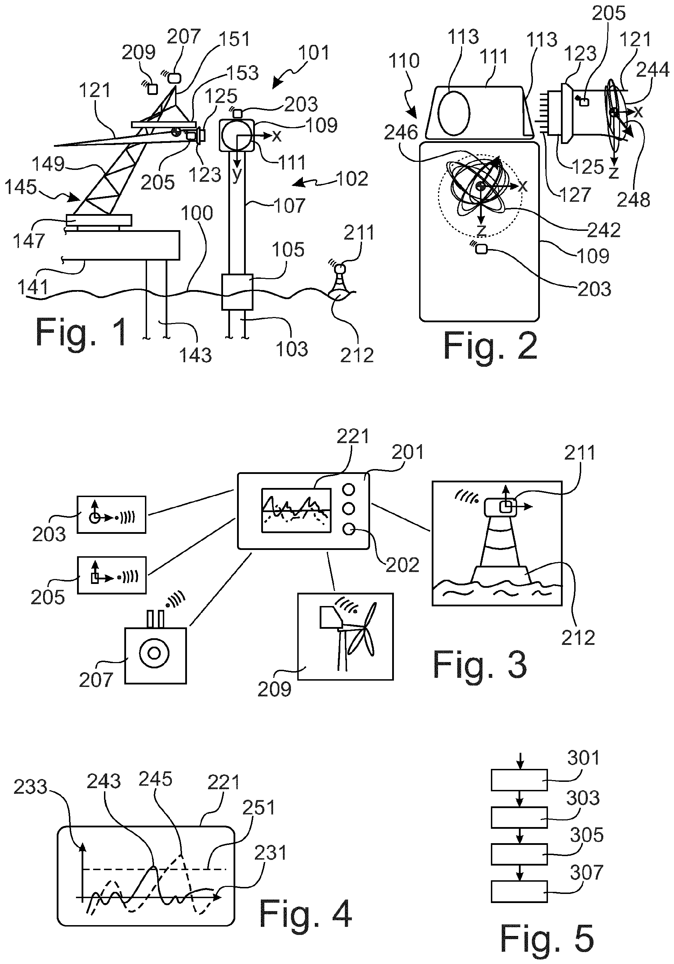

Ein beispielhafter Ablauf des erfindungsgemäßen Verfahrens sei im Folgenden erläutert (siehe Fig. 5):

Das Ermitteln 301 einer Beschleunigung wird mittels eines Beschleunigungssensors durchgeführt. Im Anschluss erfolgt ein Prognostizieren 303 einer zukünftigen Beschleunigung auf Grundlage des Ermittelns 301. Daraufhin wird ein Vergleichen 305 der prognostizierten zukünftigen Beschleunigung mit einem Schwellwert vorgenommen. Sofern der Schwellwert nicht überschritten wird, erfolgt dann ein Montieren der entsprechenden Windkraftanlage.

### Bezugszeichenliste

- 100: Wasseroberfläche
- 101: Windkraft-Baustelle
- 102: Windkraftanlage
- 103: Fundament
- 105: Übergangsstück
- 107: Turm
- 109: Maschinenhaus
- 110: Stirnseite
- 111: Nabe
- 113: Blattanschluss
- 121: Rotorblatt
- 123: Dichtung
- 125: Flansch
- 127: Stehbolzen
- 141: Errichterschiff
- 143: Pfahl
- 145: Kran
- 147: Maschinenhaus
- 149: Ausleger
- 151: Seil
- 153: Hebemittel
- 201: Computer
- 202: Knopf
- 203: Beschleunigungsmodul
- 205: Beschleunigungsmodul
- 207: Kameramodul
- 209: Windmodul
- 211: Bojenmodul
- 212: Boje
- 221: Bildschirm
- 231: Zeit
- 233: Ort
- 242: Beschleunigungssignal
- 243: Signalverlauf
- 244: Beschleunigungssignal
- 245: Signalverlauf
- 246: Betrag
- 248: Betrag
- 251: Schwellwert

## Patentansprüche

1. Verfahren zum Optimieren eines Montierens eines zu installierenden Bauteils (121) an einer Windenergieanlage (102), wobei ein installiertes Bauteil (109) einen ersten Beschleunigungssensor (203) zum Aufnehmen einer Beschleunigung (242) aufweist, umfassend folgende Schritte:
- Ermitteln einer Störbeschleunigung (246) und/oder einer aus der Störbeschleunigung (246) abgeleiteten Größe des installierten Bauteiles in einer Störachse oder mehreren Störachsen mittels dem ersten Beschleunigungssensor (203), wobei das Verfahren **gekennzeichnet ist durch** die folgenden Schritte:
- Prognostizieren eines zukünftigen Störbeschleunigungswertes oder einer daraus abgeleiteten Größe entlang der Störachse oder mehrerer Störachsen mittels einer mathematischen Methode, sodass ein erster Prognosewert für die zukünftige Störbeschleunigung und/oder eine daraus abgeleitete Größe des installierten Bauteils vorliegt,
- Vergleichen des ersten Prognosewertes mit einem ersten Schwellwert (251) für eine zulässige Störbeschleunigung oder eine daraus abgeleitete Größe entlang der Störachse oder der Störachsen,
- Montieren des zu installierenden Bauteils (121), für den Fall, dass der Prognosewert unterhalb des Schwellwertes liegt,
sodass das Montieren optimiert durchgeführt wird.

2. Verfahren gemäß Anspruch 1, **dadurch gekennzeichnet, dass** am zu installierenden Bauteil ein zweiter Beschleunigungssensor (205) zum Aufnehmen einer Beschleunigung angeordnet ist und das Verfahren folgende, zusätzliche Schritte umfasst:
- Ermitteln einer Montagebeschleunigung (244) oder einer daraus abgeleiteten Größe des zu installierenden Bauteils (121) in einer Montageachse oder mehrerer Montageachsen mit dem zweiten Beschleunigungssensor (205),
- Prognostizieren eines zukünftigen Montagebeschleunigungswertes des zu installierenden Bauteils (121) entlang der Montageachse oder mehrerer Montageachsen mittels einer mathematischen Methode, sodass ein zweiter Prognosewert für die zukünftige Montagebeschleunigung oder eine daraus abgeleitete Größe des zu installierenden Bauteils (121) vorliegt,
- Vergleichen des zweiten Prognosewertes mit einem zweiten Schwellwert (251) für eine zulässige Montagebeschleunigung oder eine daraus abgeleitete Größe des zu installierenden Bauteils entlang der Montageachse oder der Montageachsen,
- Montieren des zu installierenden Bauteils (121), für den Fall, dass der zweite Prognosewert unterhalb des zweiten Schwellwertes liegt.

3. Verfahren gemäß Anspruch 2, **dadurch gekennzeichnet, dass** folgende, zusätzliche Schritte durchgeführt werden:
- Fusionieren des ersten Prognosewertes und des zweiten Prognosewertes derart, dass ein fusionierter Prognosewert für eine Relativbeschleunigung oder eine daraus abgeleitete Größe zwischen installiertem Bauteil (109) und dem zu installierenden Bauteil (121) vorliegt,
- Vergleichen des fusionierten Prognosewertes mit einem dritten Schwellwert für eine zulässige Relativbeschleunigung oder eine zulässige daraus abgeleitete Größe des zu installierenden Bauteils (121) und des installierten Bauteils (109),
- Montieren des zu installierenden Bauteils (121), für den Fall, dass der überlagerte Prognosewert unterhalb des dritten Schwellwertes liegt.

4. Verfahren gemäß einem der vorherigen Ansprüche, **dadurch gekennzeichnet, dass** das Ermitteln der Störbeschleunigung (242) und/oder der Montagebeschleunigung (244) in einer Bewegungsachse entlang oder im Wesentlichen entlang einer Fügeachse des installierten Bauteils (109) und/oder des zu installierenden Bauteils (121) erfolgt.

5. Verfahren gemäß einem der vorherigen Ansprüche, **dadurch gekennzeichnet, dass** das Ermitteln der Störbeschleunigung (242) und/oder der Montagebeschleunigung (244) in einer Bewegungsachse quer oder im Wesentlichen quer zu einer Fügeachse des installierten Bauteils (109) und/oder des zu installierenden Bauteils (121) erfolgt.

6. Verfahren gemäß einem der vorherigen Ansprüche, **dadurch gekennzeichnet, dass** der erste Beschleunigungssensor (203) an einem Fügebereich des installierten Bauteils (109) und/oder der zweite Beschleunigungssensor (205) an einem Fügebereich des zu installierenden Bauteils (121) angeordnet ist.

7. Verfahren gemäß einem der vorherigen Ansprüche, **dadurch gekennzeichnet, dass** der zukünftige Störbeschleunigungswert und/oder zukünftige Montagebeschleunigungswert und/oder die aus dem zukünftigen Störbeschleunigungswert und/oder dem zukünftigen Montagebeschleunigungswert abgeleitete Größe und/oder der zukünftige Relativbeschleunigungswert oder die aus dem zukünftigen Relativbeschleunigungswert abgeleitete Größe durch Bestimmen einer Steigung eines Amplitudenverlaufs und/oder durch Bestimmen einer Steigung einer Hüllkurve eines Amplitudenverlaufs prognostiziert wird.

8. Verfahren gemäß einem der vorherigen Ansprüche, **dadurch gekennzeichnet, dass** der Störbeschleunigungswert und/oder der Montagebeschleunigungswert mittels eines Funksignals und/oder mittels eines optischen Signals, insbesondere an eine Auswerteeinheit zum prognostizieren der zukünftigen Störbeschleunigung und/oder zukünftigen Montagebeschleunigung oder der aus der zukünftigen Störbeschleunigung und/oder zukünftigen Montagebeschleunigung abgeleiteten Größe und/oder der zukünftigen Relativbeschleunigung und/oder der aus der zukünftigen Relativbeschleunigung abgeleiteten Größe, übertragen werden.

9. Verfahren gemäß einem der vorherigen Ansprüche, **dadurch gekennzeichnet, dass** das Prognostizieren mittels eines weiteren Vergleichs oder weiterer Vergleiche mit einem weiteren Schwellwert oder weiteren Schwellwerten, insbesondere gegenüber einem oder mehrerer Schwellwerte, welche eine Funktion aus einer Wellenhöhe, einer Windrichtung und/oder einer Windgeschwindigkeit ist oder sind, unterstützt wird, sodass mittels dieses weiteren Vergleichs oder dieser weiteren Vergleiche die Entscheidung über ein Durchführen des Montierens unterstützt wird.

10. System (201) zum Optimieren der Montage eines zu installierenden Bauteils einer Windenergieanlage welches eingerichtet ist zum Durchführen eines Verfahrens gemäß einem der Ansprüche 1 bis 9.

11. Verfahren zum Steuern einer Montagevorrichtung, insbesondere eines Krans (145), mit einer auf die Montagevorrichtung einwirkenden Steuerungseinheit, für eine Windenergieanlage (102), wobei ein Optimieren eines Montierens eines zu installierenden Bauteils (121) mit einem Verfahren gemäß einem der vorherigen Ansprüche 1 bis 9 durchgeführt wird, wobei die Steuerungseinheit derart eingerichtet ist, dass eine Relativbewegung zwischen installiertem Bauteil und zu installierendem Bauteil auf Grundlage der ermittelten oder zukünftigen Störbeschleunigung und/oder zukünftigen Montagebeschleunigung und/oder zukünftigen Relativbeschleunigung und/oder einer abgeleiteten Größe der Störbeschleunigung und/oder der Montagebeschleunigung und/oder der Relativbeschleunigung mittels einer Steuerung oder Regelung der Montagevorrichtung reduziert oder vermieden wird.

12. Steuerung zum aktiven Beeinflussen einer Montagevorrichtung für eine Windenergieanlage, welche eingerichtet ist zum Durchführen eines Verfahrens gemäß Anspruch 11.

## Claims

1. Method for optimising a mounting of a component to be installed (121) on a wind turbine (102), wherein an installed component (109) has a first acceleration sensor (203) for recording an acceleration (242), comprising the following steps:
- determining a disturbance acceleration (246) and/or a variable, derived from the disturbance acceleration (246), of the installed component in a disturbance axis or a plurality of disturbance axes by means of the acceleration sensor (203), wherein the method is **characterised by** the following steps:
- predicting a future disturbance acceleration value or a variable derived therefrom along the disturbance axis or a plurality of disturbance axes by means of a mathematical method, so that there is a first predicted value for the future disturbance acceleration and/or a variable derived therefrom of the installed component,
- comparing the first predicted value with a first threshold (251) for a permissible disturbance acceleration or a variable derived therefrom along the disturbance axis or disturbance axes,
- mounting the component to be installed (121), in the event that the predicted value is below the threshold,
such that the mounting is carried out in an optimised manner.

2. Method according to claim 1, **characterised in that** a second acceleration sensor (205) is arranged on the component to be installed for recording an acceleration and the method comprises the following additional steps:
- determining a mounting acceleration (244) or a variable derived therefrom of the component to be installed (121) in one mounting axis or a plurality of mounting axes with the second acceleration sensor (205),
- predicting a future mounting acceleration value of the component to be installed (121) along the mounting axis or a plurality of mounting axes by means of a mathematical method, so that there is a second predicted value for the future mounting acceleration or a variable derived therefrom of the component to be installed (121),
- comparing the second predicted value with a second threshold (251) for a permissible mounting acceleration or a variable derived therefrom of the component to be installed along the mounting axis or mounting axes,
- mounting the component to be installed (121), in the event that the second predicted value is below the second threshold.

3. Method according to claim 2, **characterised in that** the following, additional steps are performed:
- fusing the first predicted value and the second predicted value such that there is a fused predicted value for a relative acceleration or a variable derived therefrom between the installed component (109) and the component to be installed (121),
- comparing the fused predicted value with a third threshold for a permissible relative acceleration or a reliable variable derived therefrom of the component to be installed (121) and of the installed component (109),
- mounting the component to be installed (121), in the event that the superimposed predicted value is below the third threshold.

4. Method according to any one of the preceding claims, **characterised in that** determining the disturbance acceleration (242) and/or the mounting acceleration (244) is carried out in a movement axis along or substantially along a joining axis of the installed component (109) and/or of the component to be installed (121).

5. Method according to any one of the preceding claims, **characterised in that** determining the disturbance acceleration (242) and/or the mounting acceleration (244) is carried out in a movement axis transverse or substantially transverse to a joining axis of the installed component (109) and/or of the component to be installed (121).

6. Method according to any one of the preceding claims, **characterised in that** the first acceleration sensor (203) is arranged on a joining area of the installed component (109) and/or the second acceleration sensor (205) is arranged on a joining area of the component to be installed (121).

7. Method according to any one of the preceding claims, **characterised in that** the future disturbance acceleration value and/or the future mounting acceleration value and/or the variable derived from the future disturbance acceleration value and/or the future mounting acceleration value and/or the future relative acceleration value or the variable derived from the future relative acceleration value is predicted by determining a slope of an amplitude curve and/or determining a slope of an envelope of an amplitude curve.

8. Method according to any one of the preceding claims, **characterised in that** the disturbance acceleration value and/or the mounting acceleration value are transmitted by means of a radio signal and/or by means of an optical signal, in particular to an evaluation unit for predicting the future disturbance acceleration and/or future mounting acceleration or the variable derived from the future disturbance acceleration and/or future mounting acceleration and/or the future relative acceleration and/or the variable derived from the future relative acceleration.

9. Method according to any one of the preceding claims, **characterised in that** predicting is supported by means of a further comparison or further comparisons with a further threshold value or further threshold values, in particular with respect to one or more threshold values that is or are a function of a wave height, a wind direction and/or a wind speed, such that by means of this further comparison or these further comparisons the decision on whether to carry out the mounting is supported.

10. System (201) for optimising the mounting of a component to be installed of a wind turbine, which system is configured to perform a method according to any one of claims 1 to 9.

11. Method for controlling a mounting device, in particular a crane (145), having a control unit acting on the mounting device, for a wind turbine (102), wherein mounting of a component to be installed (121) is optimised by means of a method according to any one of the preceding claims 1 to 9, wherein the control unit is configured such that a relative movement between the installed component and the component to be installed is reduced or avoided on the basis of the determined or future disturbance acceleration and/or future mounting acceleration and/or future relative acceleration and/or a derived variable of the disturbance acceleration and/or the mounting acceleration and/or the relative acceleration by means of a controller or regulator of the mounting device.

12. Controller for actively influencing a mounting device for a wind turbine, which is configured to perform a method according to claim 11.

## Revendications

1. Procédé d'optimisation d'un montage d'un composant à installer (121) sur une éolienne (102), un composant installé (109) présentant un premier capteur d'accélération (203) destiné à enregistrer une accélération (242), comprenant les étapes suivantes :
- détermination d'une accélération perturbatrice (246) et/ou d'une grandeur dérivée de l'accélération perturbatrice (246) du composant installé dans un axe de perturbation ou plusieurs axes de perturbation au moyen du premier capteur d'accélération (203), le procédé étant **caractérisé par** les étapes suivantes :
- prévision d'une valeur d'accélération perturbatrice future ou d'une grandeur dérivée de celle-ci le long de l'axe de perturbation ou de plusieurs axes de perturbation au moyen d'une méthode mathématique, de telle sorte que l'on a une première valeur de prévision pour l'accélération perturbatrice future et/ou une grandeur dérivée de celle-ci du composant installé,
- comparaison de la première valeur de prévision avec une première valeur seuil (251) pour une accélération perturbatrice admissible ou une grandeur dérivée de celle-ci de l'axe de perturbation ou des axes de perturbation,
- montage du composant à installer (121), dans le cas où la valeur de prévision est inférieure à la valeur seuil,
de telle sorte que le montage est effectué de manière optimisée.

2. Procédé selon la revendication 1, **caractérisé en ce qu'**un deuxième capteur d'accélération (205) destiné à enregistrer une accélération est disposé sur le composant à installer et le procédé comprend les étapes supplémentaires suivantes :
- détermination d'une accélération de montage (244) ou d'une valeur dérivée de celle-ci du composant à installer (121) dans un axe de montage ou plusieurs axes de montage avec le deuxième capteur d'accélération (205),
- prévision d'une valeur d'accélération de montage future du composant à installer (121) le long de l'axe de montage ou de plusieurs axes de montage au moyen d'une méthode mathématique, de telle sorte que l'on a une deuxième valeur de prévision pour l'accélération de montage future ou une grandeur dérivée de celle-ci du composant à installer (121),
- comparaison de la deuxième valeur de prévision avec une deuxième valeur seuil (251) pour une accélération de montage admissible ou une grandeur dérivée de celle-ci du composant à installer le long de l'axe de montage ou des axes de montage,
- montage du composant à installer (121), dans le cas où la deuxième valeur de prévision est inférieure à la deuxième valeur seuil.

3. Procédé selon la revendication 2, **caractérisé en ce que** les étapes supplémentaires suivantes sont exécutées :
- fusionnement de la première valeur de prévision et de la deuxième valeur de prévision de telle manière que l'on a une valeur de prévision fusionnée pour une accélération relative, ou une grandeur dérivée de celle-ci, entre le composant installé (109) et le composant à installer (121),
- comparaison de la valeur de prévision fusionnée avec une troisième valeur seuil pour une accélération relative admissible, ou une grandeur admissible dérivée de celle-ci, du composant à installer (121) et du composant installé (109),
- montage du composant à installer (121), dans le cas où la valeur de prévision prioritaire est inférieure à la troisième valeur seuil.

4. Procédé selon l'une des revendications précédentes, **caractérisé en ce que** la détermination de l'accélération perturbatrice (242) et/ou de l'accélération de montage (244) est effectuée dans un axe de déplacement le long ou sensiblement le long d'un axe d'assemblage du composant installé (109) et/ou du composant à installer (121).

5. Procédé selon l'une des revendications précédentes, **caractérisé en ce que** la détermination de l'accélération perturbatrice (242) et/ou de l'accélération de montage (244) est effectuée dans un axe de déplacement transversal ou sensiblement transversal à un axe d'assemblage du composant installé (109) et/ou du composant à installer (121).

6. Procédé selon l'une des revendications précédentes, **caractérisé en ce que** le premier capteur d'accélération (203) est disposé sur une zone d'assemblage du composant installé (109) et/ou le deuxième capteur d'accélération (205) est disposé sur une zone d'assemblage du composant à installer (121).

7. Procédé selon l'une des revendications précédentes, **caractérisé en ce que** la valeur d'accélération perturbatrice future et/ou la valeur d'accélération de montage future et/ou la grandeur dérivée de la valeur d'accélération perturbatrice future et/ou de la valeur d'accélération de montage future et/ou la valeur d'accélération relative future ou la grandeur dérivée de la valeur d'accélération relative future sont prévues en déterminant une montée d'une caractéristique d'amplitude et/ou en déterminant une montée d'une courbe enveloppe d'une caractéristique d'amplitude.

8. Procédé selon l'une des revendications précédentes, **caractérisé en ce que** la valeur d'accélération perturbatrice et/ou la valeur d'accélération de montage sont transmises au moyen d'un signal radio et/ou au moyen d'un signal optique, en particulier à une unité d'évaluation destinée à la prévision de l'accélération perturbatrice future et/ou de l'accélération de montage future ou de la grandeur dérivée de l'accélération perturbatrice future et/ou de l'accélération de montage future et/ou de l'accélération relative future et/ou de la grandeur dérivée de l'accélération relative future.

9. Procédé selon l'une des revendications précédentes, **caractérisé en ce que** la prévision est étayée au moyen d'une autre comparaison ou d'autres comparaisons avec une autre valeur seuil ou d'autres valeurs seuils, en particulier par rapport à une ou plusieurs valeurs seuils qui est ou sont fonction d'une hauteur de vague, d'une direction du vent et/ou d'une vitesse du vent, de telle sorte que la décision concernant une exécution du montage est étayée au moyen de cette autre comparaison ou de ces autres comparaisons.

10. Système (201) d'optimisation du montage d'un composant à installer d'une éolienne, qui est conçu pour exécuter un procédé selon l'une des revendications 1 à 9.

11. Procédé de commande d'un dispositif de montage, en particulier d'une grue (145), avec une unité de commande agissant sur le dispositif de montage, pour une éolienne (102), une optimisation d'un montage d'un composant à installer (121) étant exécutée par un procédé selon l'une des revendications précédentes 1 à 9, l'unité de commande étant configurée de telle manière qu'un déplacement relatif entre le composant installé et le composant à installer est réduit ou évité au moyen d'une commande ou d'une régulation du dispositif de montage sur la base de l'accélération perturbatrice déterminée ou future et/ou de l'accélération de montage future et/ou de l'accélération relative future et/ou d'une grandeur dérivée de l'accélération perturbatrice et/ou de l'accélération de montage et/ou de l'accélération relative.

12. Commande destinée à influencer activement un dispositif de montage pour une éolienne, qui est configurée pour exécuter un procédé selon la revendication 11.
